# FASCICULE DE BREVET EUROPEEN

(11) **EP 2 900 484 B1**
(45) Date de publication et mention de la délivrance du brevet: **16.12.2020**
(21) Numéro de dépôt: 13779257.8
(22) Date de dépôt: 18.09.2013
(51) Int. Cl.: B44B 3/00, B60R 13/10

(54) **MARQUAGE DE MOTEUR AVEC PROTECTION ANTICORROSION**
MOTORMARKIERUNG MIT KORROSIONSSCHUTZ
ENGINE MARKING WITH ANTI-CORROSION PROTECTION

(30) Priorité: 25.09.2012 FR 1258963
(43) Date de publication de la demande: 05.08.2015
(73) Titulaire: Renault S.A.S., 92100 Boulogne-Billancourt (FR)
(72) Inventeur: OLIVIER, David, F-27460 Igoville (FR); HEBERT, Nicolas, F-76410 Saint Aubin les Elfbeuf (FR); HERBIN, Pascal, F-78490 Mere (FR)
(86) Numéro de dépôt international: PCT/FR2013/052141
(87) Numéro de publication internationale: WO 2014/049228

(56) Documents cités:
- EP-A1- 0 631 886
- WO-A1-2007/008104
- DE-A1- 4 429 751
- DE-A1-102011 107 018
- FR-A1- 2 617 834
- FR-A1- 2 739 071
- US-A- 4 936 606

## Description

### Domaine technique de l'invention

La présente invention se rapporte au domaine des véhicules automobiles et concerne notamment des systèmes d'identification de moteur de véhicule automobile.

L'invention concerne plus particulièrement la protection anticorrosion du gravage d'identification de moteur de véhicule

### Etat de la technique

Les moteurs de véhicule automobile comportent un identifiant composé de caractères alphanumériques marqués de façon préférentielle sur ledit moteur. Cet identifiant ne doit pas être altéré pendant une durée minimale de douze ans à titre légal. De manière connue, le marquage du moteur est effectué par gravage sur une partie de surface extérieure de paroi du moteur. Une couche de vernis est ensuite appliquée sur toute la zone de marquage de manière connue afin d'assurer une protection contre des éléments environnementaux auxquels est exposé ledit moteur.

Dans des environnements rigoureux tels que les zones géographiques présentant des grands froids hivernaux entrainant des salages abondants des routes, lesdits moteurs et donc la zone de gravage sont soumis à une corrosion importante ainsi que la zone de marquage des moteurs. L'identifiant peut notamment ne plus être lisible ce qui peut entrainer une immobilisation du véhicule par les autorités de ces pays.

Pour pallier ce problème de corrosion de la zone de marquage, diverses solutions de vernissage ont été testées nécessitant une apposition d'une couche de vernis d'épaisseur plus importante de l'ordre de 50 microns. Cette opération ne peut cependant être effectuée en une seule couche sur une surface sensiblement verticale car le vernis a tendance à couler, ce qui amène une contrainte supplémentaire de positionnement de la zone de marquage, horizontale. Le temps de séchage est également fortement affecté par l'accroissement de l'épaisseur de la couche de vernis.

D'autres solutions de vernissage ont été testées également avec des vernis bi-composants. Cependant, ces types de vernis sont fortement nocifs et donc incompatibles avec une ligne d'assemblage de moteur : l'application de ces types de vernis nécessite notamment une cabine étanche avec un dispositif d'aspiration/extraction d'air qui contient des vapeurs nocives et une étape supplémentaire de séchage du vernis par rayonnement ultraviolet. Le process de montage de moteurs et donc le coût sont donc fortement impactés par cette opération de protection de la zone de marquage de moteur.

Par ailleurs, le document DE 10 2011 107018 A1 divulgue le recouvrement d'une plaque comportant un identifiant du véhicule, disposée dans un enfoncement de carrosserie, par une plaque de protection fixée dans la carrosserie.

### Bref résumé de l'invention

Un des buts de l'invention est de pallier ces inconvénients et l'invention a pour objet un procédé et un moyen de protection anticorrosion de la zone de marquage simple, compatible avec les temps de cycle du process de fabrication des moteurs et peu onéreux.

L'objet de l'invention est caractérisé plus particulièrement par un procédé de marquage de moteur de véhicule automobile, selon la revendication 1, comprenant :
- une étape de gravage d'un identifiant du moteur sur une surface de marquage du moteur,
caractérisé en ce que postérieurement à l'étape de gravage, le procédé comprend une étape de protection de l'identifiant par la fixation étanche, par collage, d'un moyen de protection comportant une plaque transparente sur la surface de marquage, le collage rendant plus simple l'étape de protection.

L'objet de l'invention est également caractérisé par un moyen de protection d'une partie de surface de marquage de paroi de moteur de véhicule automobile, selon la revendication 4.

Selon d'autres caractéristiques avantageuses de l'invention :
- l'étape de gravage est précédée d'une étape d'usinage de la surface de marquage ;
- l'étape de collage est précédée d'une étape de nettoyage de propreté pour assurer une meilleure accroche du moyen de protection contre la surface de marquage ;
- le moyen de protection comprend une plaque transparente et incolore destinée à être fixée sur une partie usinée de surface dudit moteur destinée au marquage de l'identifiant, la lisibilité des caractères d'identification est de ce fait améliorée ;
- la plaque est collée sur la partie de surface du moteur avec un moyen adhésif résistant dans une plage de températures comprise entre -40°C et 200°C ;
- la plaque présente une épaisseur supérieure à 150 microns qui est largement supérieure à l'épaisseur maximale réalisable avec un vernis mono-composant ;
- la plaque de protection est en matière plastique anti-rayures ;
- la plaque transparente comporte une face adhésive destinée à être fixée sur la partie usinée de surface de marquage dudit moteur et comportant une couche d'adhésif acrylique adaptée à présenter une épaisseur après séchage supérieure à 100 microns, pour faciliter l'étape de protection de la zone de marquage.

### Brève description des figures

L'invention est illustrée ci-après à l'aide d'un exemple non limitatif de réalisation de l'invention et en référence aux dessins annexés dans lesquels :
La figure 1 est une vue schématique de dessus d'une partie de surface marquage de moteur.
La figure 2 est une vue schématique de coupe selon le plan AA de la figure 1.

### Description détaillée des figures

Un moteur de véhicule (non représenté) comporte une surface de marquage disposée sur une partie de surface de paroi et destinée à recevoir un identifiant 11 dudit moteur.

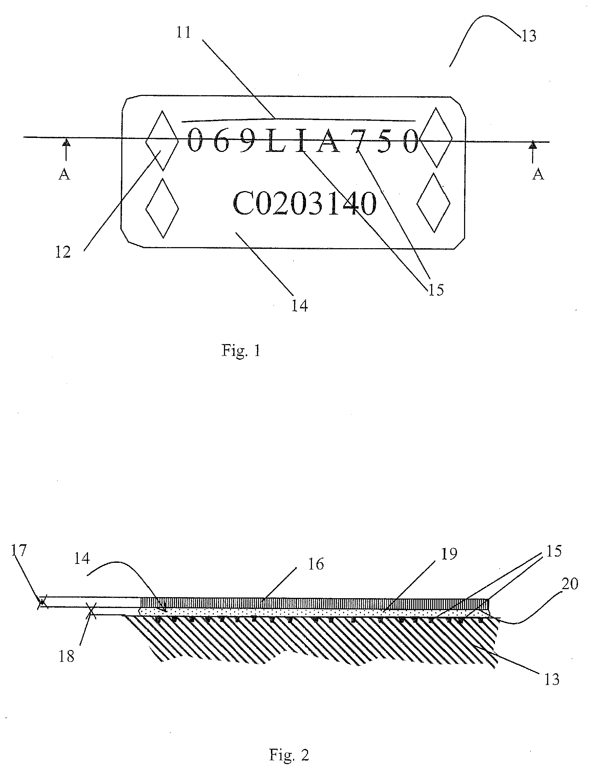

Selon la figure 1, l'identifiant 11 du moteur de véhicule automobile comprend une chaîne de caractères 15 décrite dans le cadre législatif (non présenté) des pays. De manière connue, les caractères d'identification sont gravés sur la paroi 13 du moteur. Les caractères 15 sont des caractères alphanumériques latins et sont inscrits par exemple entre deux logos 12 de la marque du constructeur.

Selon une caractéristique avantageuse de l'invention, ladite surface de marquage 14 est préalablement usinée pour améliorer la lisibilité des caractères 15 issus du gravage. La lecture des caractères sur une surface usinée est meilleure que sur une surface brute, éventuellement après un léger brossage de ladite surface. La surface de marquage 14 est sensiblement une zone rectangulaire de l'ordre de 50 mm de long sur 20 mm de large. L'étape de gravage des caractères est effectuée de manière connue par micro-percussion sur ladite surface.

Un moyen de protection transparent est ensuite fixé au dessus de la surface de marquage 14 de manière à ce que ladite surface contenant les caractères d'identification soit protégée de l'environnement. Le moyen de protection se présente sous la forme d'une plaque 16 en matière transparente couvrant la surface de marquage 14.

La fixation est effectuée par collage sur la paroi 13 du moteur. L'usinage de la surface de marquage 14 est alors une étape préparatoire préalable à l'étape de collage. De manière avantageuse, la surface usinée est ensuite nettoyée pour enlever des traces de poussières et de liquide pour préparer l'accrochage du moyen de protection de la partie de marquage contre la surface de marquage.

Selon la figure 2, la surface du moyen de protection couvre sensiblement la superficie de la surface 14 de marquage et est fixée contre la paroi 13 du moteur.

La plaque 16 présente une épaisseur 17 comprise entre 150 et 200 microns pour obtenir une bonne résistance au vieillissement et de résistance à la corrosion, suite à des essais effectués dans les environnements salins et corrosifs. Une épaisseur supérieure reste dans la portée de l'invention. De telles épaisseurs confèrent une certaine souplesse à ladite plaque qui peut alors être positionnée sur une surface qui n'est pas forcément plane.

La plaque 16 constituant le moyen de protection est de manière préférentielle en plastique ou en complexe de polyester transparent incolore avec préférentiellement une densité supérieure à 1,4 g/cm³ afin d'avoir une bonne résistance aux rayures. Par exemple le polyester TMP934 de COMPUTYPE® peut être utilisé pour une bonne résistance aux rayures. La plaque peut être constituée par exemple par un film polyester d'épaisseur 175µm et d'élasticité supérieure à 4 m2/kg sans impacter la portée de l'invention. Elle peut toutefois être dans une matière différente comme du verre, lesdites matières ayant une bonne tenue au vieillissement et de résistance à la corrosion.

La plaque 16 comporte une face adhésive 20 destinée au contact contre la paroi du moteur avec un adhésif 19 de manière préférentielle acrylique. Ledit adhésif appliqué présente une résistance en tenue dans une plage de températures au moins comprise entre -40°C et 200°C. De manière connue, l'adhésif 19 est choisi pour présenter une force de liaison supérieure à 3 N/cm. Un exemple d'adhésif utilisable est une solution à 60% d'un polymère acrylique thermodurcissable avec un temps de séchage de l'ordre de 1 h. Au cours de l'application de l'adhésif en couche, le solvant volatil s'évapore pour laisser la place à une couche collante non volatile. Après séchage, la couche adhésive présente une épaisseur 18 proche de 125 microns qui contribue également à la tenue au vieillissement et à la résistance à la corrosion.

Le moyen de protection 16 peut par exemple se présenter sur une bande de support (non représentée) comportant une surface de contact réfractaire à l'adhésif par exemple du papier kraft. Ledit moyen peut alors facilement être enlevé de la bande de support pour être apposée sur la surface de marquage préalablement usinée et nettoyée. Les performances optimales de la colle sont obtenues alors au bout de 1h. L'apposition du moyen de protection contre la surface de marquage peut être effectuée sous pression afin de réduite le temps de polymérisation de la colle.

L'objectif de l'invention est atteint : la protection anticorrosion est assurée par un moyen de protection comportant une plaque collé contre la surface de marquage. L'étape de protection du marquage selon l'invention impacte de façon moins significative qu'une étape de vernissage de ladite surface le process de montage des moteurs. La plaque et le moyen adhésif se révèlent par ailleurs bien moins couteux qu'un vernis bi-composants par exemple.

## Revendications

1. Procédé de marquage de moteur de véhicule automobile comprenant :
- une étape de gravage d'un identifiant (11) du moteur sur une surface (14) de marquage sur une paroi (13) du moteur,
**caractérisé en ce que** postérieurement à l'étape de gravage, le procédé comprend une étape de protection de l'identifiant (11) par la fixation étanche d'un moyen de protection comportant une plaque transparente (16) résistante à la corrosion fixée contre la surface de marquage par collage.

2. Procédé selon la revendication 1, **caractérisé en ce que** l'étape de gravage est précédée d'une étape d'usinage de la surface de marquage (14).

3. Procédé selon l'une quelconque des revendications 1 à 2, **caractérisé en ce que** l'étape de collage est précédée d'une étape de nettoyage de propreté.

4. Moyen de protection d'une partie de surface de marquage de paroi (13) de moteur de véhicule automobile, **caractérisé en ce que** le moyen de protection comprend une plaque de protection résistante à la corrosion transparente (16) incolore et résistante aux rayures fixée par collage sur ladite partie usinée de surface (14) dudit moteur suivant le procédé selon la revendication 1.

5. Moyen de protection selon la revendication 4, **caractérisé en ce que** la plaque (16) présente une épaisseur (17) supérieure à 150 microns.

6. Moyen de protection selon l'une quelconque des revendications 4 ou 5, **caractérisé en ce que** la plaque est collée sur la partie de surface du moteur avec un moyen adhésif (19) résistant dans une plage de températures comprise entre -40°C et 200°C.

7. Moyen de protection selon l'une quelconque des revendications 4 à 6, **caractérisé en ce que** la plaque transparente (16) est en matière plastique.

8. Moyen de protection selon l'une quelconque des revendications 4 à 7, **caractérisé en ce que** la plaque transparente (16) comporte une face adhésive (20) destinée à être fixée sur la partie de la surface de marquage (14) dudit moteur et comportant une couche d'adhésif (19) adaptée à présenter une épaisseur (18) après séchage supérieure à 100 microns.

9. Moteur de véhicule comportant un identifiant protégé contre la corrosion par un moyen selon l'une des revendications 4 à 8.

## Patentansprüche

1. Verfahren zur Motormarkierung eines Kraftfahrzeugs, das enthält:
- einen Schritt des Gravierens einer Kennung (11) des Motors auf eine Markierungsfläche (14) auf einer Wand (13) des Motors,
**dadurch gekennzeichnet, dass** das Verfahren nach dem Gravierschritt einen Schritt des Schutzes der Kennung (11) durch die dichte Befestigung einer Schutzeinrichtung aufweist, die eine korrosionsbeständige durchsichtige Platte (16) aufweist, die durch Kleben gegen die Markierungsfläche befestigt wird.

2. Verfahren nach Anspruch 1, **dadurch gekennzeichnet, dass** vor dem Schritt des Gravierens ein Schritt der Bearbeitung der Markierungsfläche (14) liegt.

3. Verfahren nach einem der Ansprüche 1 bis 2, **dadurch gekennzeichnet, dass** vor dem Schritt des Klebens ein Schritt der Sauberkeitsreinigung liegt.

4. Schutzeinrichtung eines Markierungsflächenteils einer Kraftfahrzeugmotorwand (13), **dadurch gekennzeichnet, dass** die Schutzeinrichtung eine farblose und kratzfeste, durchsichtige, korrosionsbeständige Schutzplatte (16) enthält, die durch Kleben auf dem bearbeiteten Flächenteil (14) des Motors gemäß dem Verfahren nach Anspruch 1 befestigt wird.

5. Schutzeinrichtung nach Anspruch 4, **dadurch gekennzeichnet, dass** die Platte (16) eine Dicke (17) von mehr als 150 Mikron aufweist.

6. Schutzeinrichtung nach einem der Ansprüche 4 oder 5, **dadurch gekennzeichnet, dass** die Platte mit einem in einem Temperaturbereich zwischen -40°C und 200°C beständigen Klebemittel (19) auf den Flächenteil des Motors geklebt wird.

7. Schutzeinrichtung nach einem der Ansprüche 4 bis 6, **dadurch gekennzeichnet, dass** die durchsichtige Platte (16) aus Kunststoff ist.

8. Schutzeinrichtung nach einem der Ansprüche 4 bis 7, **dadurch gekennzeichnet, dass** die durchsichtige Platte (16) eine Klebeseite (20) aufweist, die dazu bestimmt ist, auf dem Teil der Markierungsfläche (14) des Motors befestigt zu werden und eine Klebstoffschicht (19) aufweist, die geeignet ist, eine Dicke (18) nach dem Trocknen von mehr als 100 Mikron aufzuweisen.

9. Fahrzeugmotor, der eine durch eine Einrichtung nach einem der Ansprüche 4 bis 8 vor Korrosion geschützte Kennung aufweist.

## Claims

1. Method for marking a motor of a motor vehicle, comprising:
- a step of engraving a motor identifier (11) on a marking surface (14) on a wall (13) of the motor, **characterized in that**, after the engraving step, the method comprises a step of protecting the identifier (11) by attaching, in a sealing manner, a protection means comprising a corrosion-resistant transparent plate (16) that is attached to the marking surface by adhesive bonding.

2. Method according to Claim 1, **characterized in that** the engraving step is preceded by a step of machining the marking surface (14).

3. Method according to either one of Claims 1 and 2, **characterized in that** the adhesive bonding step is preceded by a cleaning step.

4. Means for protecting a part of a marking surface of a wall (13) of a motor of a motor vehicle, **characterized in that** the protection means comprises a corrosion-resistant transparent plate (16) that is colourless and scratch-resistant and is attached by adhesive bonding to said machined part of the surface (14) of said motor according to the method according to Claim 1.

5. Protection means according to Claim 4, **characterized in that** the plate (16) has a thickness (17) greater than 150 microns.

6. Protection means according to either one of Claims 4 and 5, **characterized in that** the plate is adhesively bonded to the part of the surface of the motor using an adhesive means (19) that is able to withstand a range of temperatures between -40°C and 200°C.

7. Protection means according to any one of Claims 4 to 6, **characterized in that** the transparent plate (16) is made of plastic material.

8. Protection means according to any one of Claims 4 to 7, **characterized in that** the transparent plate (16) comprises an adhesive face (20) that is intended to be attached to the part of the marking surface (14) of said motor and comprising an adhesive layer (19) that is able to have a thickness (18), after drying, of greater than 100 microns.

9. Vehicle motor comprising an identifier that is protected from corrosion by a means according to one of Claims 4 to 8.
